# EUROPÄISCHE PATENTSCHRIFT

(11) **EP 1 816 012 B1**
(45) Veröffentlichungstag und Bekanntmachung des Hinweises auf die Patenterteilung: **27.08.2008**
(21) Anmeldenummer: 06124861.3
(22) Anmeldetag: 28.11.2006
(51) Int. Cl.: B60C 17/00

(54) **Fahrzeugnotlaufreifen mit Seitenwandverstärkungsprofilen und Verfahren zur Herstellung der Profile**
Run-flat tire with sidewall reinforcement profils and method of producing such profils
Pneumatique pour roulage à plat avec des profilés de renforcement dans le flanc de pneumatique et procédé de fabrication des profilés de renforcement

(30) Priorität: 03.02.2006 DE 102006004949
(43) Veröffentlichungstag der Anmeldung: 08.08.2007
(73) Patentinhaber: Continental Aktiengesellschaft, 30165 Hannover (DE)
(72) Erfinder: Frerichs, Udo, 30855, Langenhagen (DE)

(56) Entgegenhaltungen:
- EP-A2- 1 160 101
- WO-A-01/43995
- WO-A-20/05030504

## Beschreibung

Die Erfindung betrifft einen Fahrzeugluftreifen mit Notlaufeigenschaften bei Druckluftverlust, bestehend aus einem profilierten Laufstreifen, einem mehrlagigen Gürtelverband, einer Innenschicht, einer zumindest einlagig ausgeführten Karkasse, Seitenwänden und mit zumindest je einem im Bereich der Seitenwand eingebrachten, im Querschnitt mondsichelförmigen Verstärkungsprofil, welches sich jeweils zumindest über einen Großteil der Seitenwandlänge erstreckt und welches aus einem Kernprofil und einem das Kernprofil fest umschließenden Randprofil besteht, wobei das Kern- und das Randprofil aus extrudierbaren Materialien bestehen, die unterschiedliche Materialeigenschaften aufweisen.

Es sind verschiedene Ausführungsformen von im Pannenfall selbstragenden Fahrzeugluftreifen bekannt. So gibt es beispielsweise eine Vielzahl von Lösungsvorschlägen mit Verstärkungsprofilen in den Reifenseiten. Die Verstärkungsprofile sind meist im Querschnitt mondsichelförmig ausgeführt und bestehen aus Gummi, wobei die Eigenschaften des Gummimaterials sicher stellen sollen, dass die Verstärkungsprofile in der Lage sind, den Reifen bei einem gewissen Druckverlust im Pannenfall über einen gewissen Laufweg stelbstragend zu erhalten. Ein derartiger Reifen ist beispielsweise aus der DE 2 331 530 A1 bekannt geworden. Die Verstärkungsprofile sind jedoch massiv und haben den Nachteil, die Seitenwände im Normalbetrieb des Reifens zu versteifen. Dies führt dazu, dass es während eines Pannenlaufes, vor allem bei seitlich wirkenden Kräften, zu einem Brechen des aus einer harten Mischung bestehenden Verstärkungsprofils kommen kann. Diesen Nachteil versucht man in der gattungsgemäßen DE 103 43 599 A1 zu vermeiden, indem man in den Kern des Verstärkungsprofils ein mondsichelförmiges Kernprofil aus einer gegenüber dem sonstigen Material des Verstärkungsprofils härteren Mischung einschließt. Durch diese Maßnahme sind die Einfederungseigenschaften und der Fahrkomfort zwar schon verbessert, aber die Fahreigenschaften weichen noch immer von denen von Fahrzeugluftreifen ohne Seitenwandverstärkungen ab.

Es ist daher die Aufgabe der Erfindung, einen Fahrzeugluftreifen mit Notlaufeigenschaften bei Druckverlust bereitzustellen, dessen Einfederungseigenschaften und dessen Fahrkomfort gegenüber bekannten Notlaufreifen wesentlich verbessert ist.

Die Erfindung besteht darin, dass das Kernprofil eine von dem Querschnitt des Randprofils abweichende Querschnittsform aufweist und zwar dergestalt, dass zumindest die axial innen liegende Seite des Kernprofilquerschnitts von der Form einer Mondsichel abweicht und zumindest eine zusätzliche Aussparung aufweist.

Erfindungsgemäß ausgeführte Verstärkungsprofile weisen einen Kern auf, dessen Querschnitt von der bekannten Mondsichelform in der Weise abweicht, dass zumindest in der axial innen gelegenen Seite des Kernprofils eine zusätzliche Aussparung angeordnet ist. Der Erfindung liegt zugrunde, dass diese zusätzliche Aussparung die Einfederungseigenschaften des Reifens im Fahrbetrieb verbessert, weil das erfindungsgemäße Kernelement durch eine oder mehrere zusätzliche Aussparungen nach Art einer Feder wirkt und den Fahrkomfort trotz Verstärkungsprofilen wesentlich verbessert.

Eine weitere Form der Ausbildung des Kernprofils sieht vor, dass beide Spitzen des Kernprofils im Querschnitt Verdickungen aufweisen.

In einer anderen Ausführungsform ist die axial innen liegende Seite des Kernprofils im Querschnitt kammartig mit einer Vielzahl von wellenartigen und/oder zick-zackartigen Aussparungen versehen. Diese Vielzahl von Aussparungen verstärkt den Effekt der Federwirkung des Kernprofils und verbessert den Fahrkomfort.

Ein weiteres Ausführungsbeispiel sieht vor, dass das Kernprofil die Querschnittsform einer Hantel mit zwei endseitigen Verdickungen aufweist, wobei die Hantel bohnenförmig nach axial innen gerichtet ist.

Die verschiedenen Ausführungsformen und auch Abwandlungen der vorbeschriebenen Kernprofile können innerhalb des Randprofils asymmetrisch angeordnet sein, so dass das Kernprofil in axialer und/oder radialer Richtung verschoben dezentriert angeordnet ist. Bevorzugt ist hierbei eine Ausführungsform, bei der das Kernprofil aus der zentrierten Lage nach axial außen verschoben ist, so dass im Querschnitt die Breite des Randprofils an der axial innen gelegenen Seite größer ist als die Breite an der axial außen gelegenen Seite. Hierdurch ist sichergestellt, dass die Außenkontur des Verstärkungsprofils auch an der axial innen gelegenen Seite trotz einer von der Mondsichelform abweichenden Kontur des Kernprofils eben ist.

Die Einfederungseigenschaften des Reifens lassen sich weiterhin verbessern, wenn sich die Profile nicht nur hinsichtlich ihrer Querschnitte, sondern zusätzlich auch hinsichtlich ihrer Materialhärten unterscheiden. Hierbei ist es zweckmäßig, wenn das Kernprofil aus härterem Material als das des Randprofils besteht. Somit kann das weichere Material des Randprofils die unter Belastung im Pannenfall im harten Kern auftretenden Kompressionsspannungen aufnehmen. Das von einer weicheren Mischung umhüllte harte Kernprofil wirkt wie eine progressive Feder, je stärker die Einfederung umso stärker ist der Widerstand. Vorteilhaft ist es, wenn die Shore-A-Härte des Kernprofils zwischen 74 und 82, insbesondere zwischen 78 und 81, beträgt und wenn die Schore-A-Härte des Randprofils zwischen 60 und 76, insbesondere zwischen 63 und 66, beträgt. Bevorzugt sind Gummimischungen einzusetzen.

Gemäß einer weiteren Ausführungsform weist das Material des Kernprofils Festigkeitsträger in Form von Fasern auf. Diese Fasern können "regellos" verteilt, miteinander als Raumgitter verbunden oder in eine bestimmte Richtung parallel zu ihrer Längserstreckung orientiert sein. Durch den Einsatz von Fasern im Kernprofil kann das die Fasern aufweisende Matrixmaterial des Kernprofils weicher oder aus der gleichen Mischung wie das Randprofil ausgeführt sein, so dass die Einfederungseigenschaften weiter verbessert werden und die im Kernprofil angeordneten Fasern die im Pannenfall auftretenden Kompressionsspannungen aufnehmen. Vorzugsweise sind die Festigkeitsträger in ihrer Längsausrichtung senkrecht zur Querschnittsfläche des Kernprofils angeordnet. Die Fasern können aus Textil, Polyamid, Aramid, Kohlefaser oder Metall hergestellt sein. Möglich sind ebenfalls Metalllegierungen, die ein sog. Formgedächtnis aufweisen.

Ein vorbeschriebenes Verstärkungsprofil, bestehend aus zwei verschiedenen Materialien, wird durch Koextrusion derart hergestellt, dass man das Material für das Randprofil durch ein Mundstück presst, welches einen Ringschlitz aufweist und einen schlauchförmigen Profilstrang erzeugt, welcher einen innenliegenden Kernprofilextrudatstrang aus dem zweiten Material formschlüssig umschließt, dass man anschließend den noch plastischen Extrudatstrang durch ein oder mehrere profilierte Rollenpaare führt, mit denen man das schlauchförmige Profil mit dem in dem schlauchförmigen Profil eingeschlossenen Kernprofil fest verbindet und mit denen man dem Verstärkungsprofil Form gibt.

Weitere Merkmale, Vorteile und Einzelheiten der Erfindung werden anhand der Zeichnungen, die schematische Ausführungsbeispiele darstellen, näher erläutert. Es zeigen die
Fig.1 einen Querschnitt durch einen Fahrzeugluftreifen mit einem Verstärkungsprofil
Fig.2 einen Querschnitt durch ein erfindungsgemäßes Kernprofil
Fig.3 einen Querschnitt durch ein weiteres Kernprofil
Fig.4 einen Querschnitt durch ein weiteres Kernprofil
Fig.5 einen Querschnitt durch ein anderes Kernprofil
Fig.6 ein Verfahren zur Herstellung des Verstärkungsprofils.

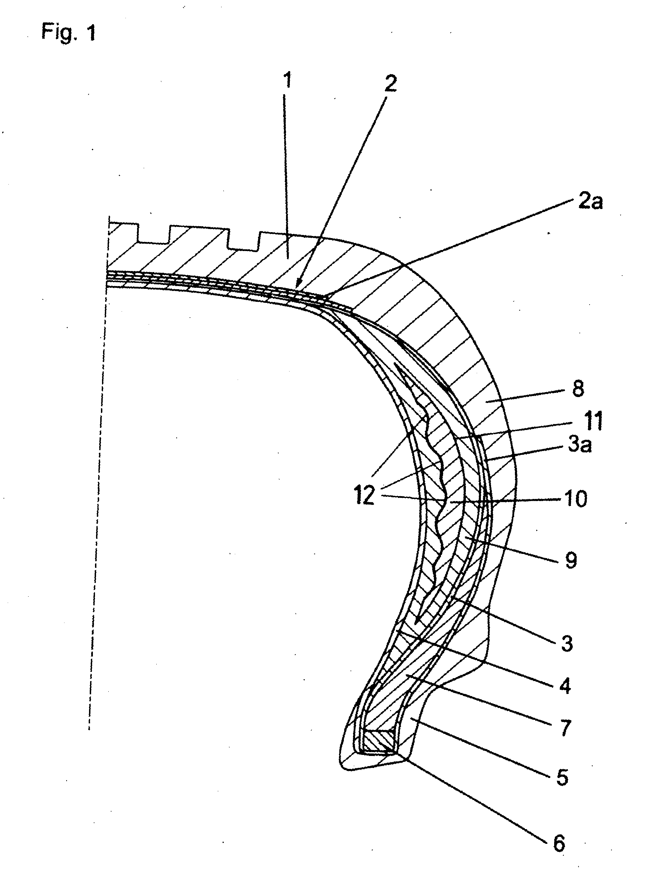

In Fig. 1 ist ein Querschnitt eines Fahrzeugluftreifens mit einem mondsichelförmigen, in der Seitenwand angeordneten Verstärkungsprofil 9 dargestellt. Das Verstärkungsprofil 9 besteht aus einem äußeren, im Querschnitt mondsichelförmigen Randprofil 11, welches ein inneres Kernprofil 10 einschließt. Der Querschnitt des Kernprofils 10 weicht dergestalt von der Querschnittsform des Randprofils 11 ab, in dem zumindest die axial innen liegende Seite zumindest eine zusätzliche Aussparung aufweist.

Die Fig.1 zeigt die wesentlichen Bestandteile, aus welchen sich der erfindungsgemäße Reifen zusammensetzt. Dieses sind ein profilierter Laufstreifen 1, ein bei der gezeigten Ausführung aus zwei Lagen 2a bestehender Gürtel 2, eine Karkasse 3, eine weitgehend luftdicht ausgeführte Innenschicht 4, Wülste 5 mit Wulstkernen 6 und Wulstkernprofilen 7, sowie Seitenwände 8 und das in äußerer Kontur etwa mondsichelförmige Verstärkungsprofil 9. Die beiden Lagen 2a des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2a orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge 3a verlaufen neben den Wulstkernprofilen 7 in Richtung Gürtel 2.

Das aus zwei elastomeren Materialen, insbesondere aus einer Kautschukmischung, hergestellte erfindungsgemäße Verstärkungsprofil 9 ist während des Aufbaus des Reifens auf der Innenschicht 4 positioniert worden und befinden sich daher zwischen dieser und der Karkassse 3. Die Dicke des Verstärkungsprofils 9 nimmt sowohl Richtung Gürtel 2 als auch Richtung Wulst 5 ab. Richtung Gürtel 2 reicht das Verstärkungsprofil 9 bis unter die Randbereiche desselben. Richtung Wulst 5 endet jedes Verstärkungsprofil 9 knapp oberhalb des Wulstkernes 6. Über den überwiegenden Bereich der Länge der Seitenwand ist das Verstärkungsprofil 9 nahezu konstant dick ausgeführt, seine Stärke beträgt hier bis zu 13 mm, insbesondere 9 bis 11 mm. Das Kernprofil 10 erstreckt sich im Inneren des Verstärkungsprofils 9 im mittleren Bereich über mindestens 30 %, insbesondere bis zu 70 % der Erstreckung desselben zwischen Wulst 5 und Gürtel 2. Jedes Kernprofil 10 ist daher komplett von Material des Randprofils 11 umhüllt, wobei die umhüllende Schicht eine im Wesentlichen konstante Dicke zwischen 1,5 und 3 mm aufweist.

Das erfindungsgemäße Verstärkungsprofil 9 enthält ein im Querschnitt von der Mondsichelform abweichendes elastomeres Kernprofil 10. Das Kernprofil 10 weist eine von dem Querschnitt des Randprofils 11 abweichende Querschnittsform auf und zwar dergestalt, dass zumindest die axial innen liegende Seite des Kernprofilquerschnitts von der Form einer Mondsichel abweicht und zumindest eine zusätzliche Aussparung aufweist.

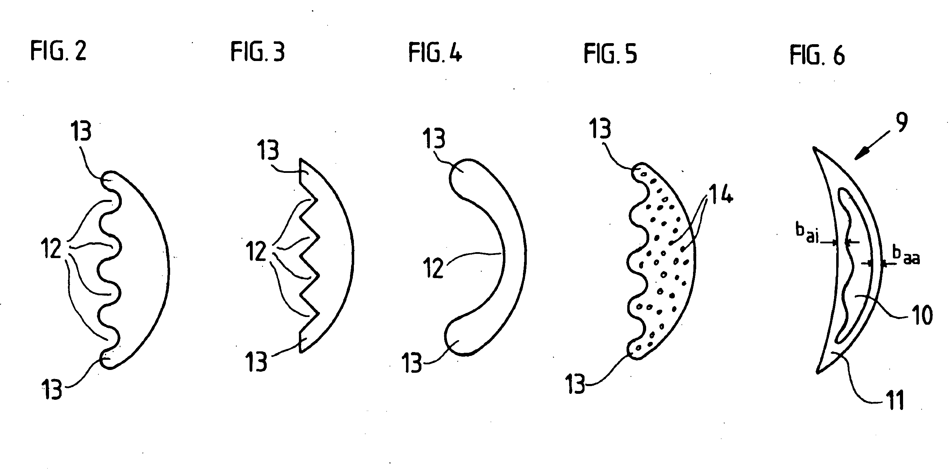

Die Fig.2 zeigt einen Querschnitt durch ein erfindungsgemäßes Kernprofil 10. Das Kernprofil ist von einem (nicht dargestellten) im wesentlichen mondsichelförmigen Randprofil 11 formschlüssig umgeben. Der Querschnitt des Kernprofils 10 weist an der axial innen liegenden Seite zusätzliche Aussparungen 12 in wellenartiger Kontur auf. Die durch die Wellenform entstehenden Aussparungen sind durch Material des umgebenden Randprofils 11 ausgefüllt. Das Randprofil 11 (nicht dargestellt) ist mit dem Kernprofil 10 luftdicht zu einem Verstärkungsprofil 9 fest verbunden. Die zusätzlichen Aussparungen 12 verbessern die Einfederungseigenschaften des Reifens im Fahrbetrieb, weil das Kernprofil nach Art einer Feder wirkt. Beide Enden des Kernprofils 10 weisen Verdickungen 13 auf.

In der Fig. 3 ist ein weiteres Kernprofil 10 dargestellt. Es unterscheidet sich von dem in Fig.2 dargestellten Profil dadurch, dass dieses Kernprofil 10 an der axial innen liegenden Seite zusätzliche Aussparungen in einer zick-zackartigen Kontur 12 aufweist. An dieser Kontur sind die Materialen des Randprofils 11 und des Kernprofils 10 verzahnt.

Die Fig. 4 zeigt ein weiteres Kernprofil 10, welches im Querschnitt eine Hantelform aufweist. Die Hantel ist bohnenartig in Richtung der axial innen liegende Seite gebogen und es sind an beiden Enden Verdickungen 13 angeordnet, während die axial innen liegende Seite eine Aussparung 12 aufweist.

In einer anderen Ausführungsform des Kernprofils der Fig. 2 ist das Kernprofil der Fig. 5 aus einem Material gefertigt, welches in der Gummigrundmasse eine Vielzahl von Festigkeitsträgern 14 aufweist. Die Festigkeitsträger 14 sind mit ihrer länglichen Erstreckung senkrecht zur Querschnittsfläche angeordnet.

Das Kernprofil 10 kann derart ausgeführt sein, dass es über einen kürzeren oder längeren Teil der Erstreckung des Verstärkungsprofils 9 verläuft. Das Kernprofil 10 kann auch innerhalb des Verstärkungsprofils 9 in Richtung Gürtel 2 oder nach axial innen oder axial außen versetzt angeordnet sein. In der Fig. 6 ist in einer bevorzugten Ausführungsform das Kernprofil 10 aus der zentrierten Lage nach axial außen verschoben, so dass im Querschnitt die Breite bₐᵢ des Randprofils an der axial innen gelegenen Seite größer ist als die Breite bₐₐ an der axial außen gelegenen Seite. Hierdurch ist sichergestellt, dass die Kontur des Verstärkungsprofils 9 auch an der axial innen gelegenen Seite, trotz einer von der Mondsichelform abweichenden Kontur des Kernprofils 10, eben ist.

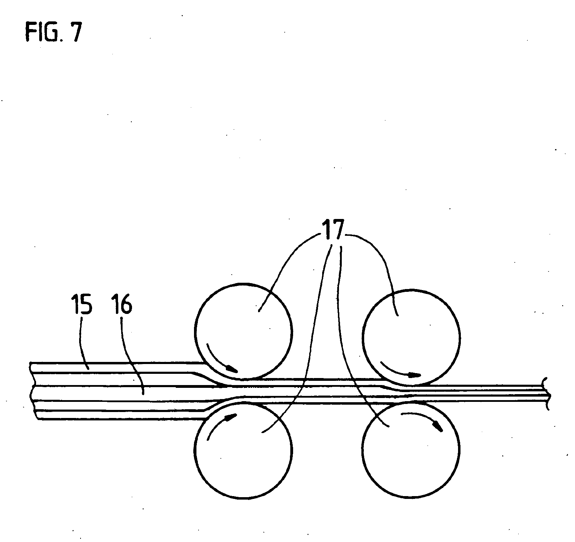

In der Fig.7 ist schematisch ein Verfahren zur Herstellung eines vorbeschriebenen Verstärkungsprofils 9 dargestellt. Das Verstärkungsprofil 9 besteht aus zwei Profilen 10,11 die aus zwei verschiedenen Materialien durch Koextrusion hergestellt werden. Das Material für das Randprofil wird durch ein Mundstück (nicht dargestellt) gepresst, welches ein Ringschlitz aufweist und einen schlauchförmigen Strang 15 erzeugt, welcher einen innenliegenden Kernprofilextrudatstrang 16 aus dem zweiten Material formschlüssig umschließt. Man führt den noch plastischen Extrudatstrang durch ein oder mehrere profilierte Rollenpaare 17, mit denen man den Extrudatstrang mit dem in dem schlauchförmigen Strang eingeschlossenen Kernprofilstrang fest verbindet und mit denen man die Querschnittsform eines Verstärkungsprofils 9 gibt. Das Verstärkungsprofil wird vorteilhafterweise vorvernetzt, damit es während des Herstellungsprozesses seine erwünschte Querschnittsform behält und nicht z.B. beim Auf- und Abwickeln von einer Lagertrommel oder während der Reifenherstellung durch den Heizbalg flach gedrückt wird.

### Bezugszeichenliste

### (Teil der Beschreibung)

- 1: Laufstreifen
- 2: Gürtel
- 3: Karkasse
- 4: Innenschicht
- 5: Wulst
- 6: Wulstkern
- 7: Wulstkernprofil
- 8: Seitenwand
- 9: Verstärkungsprofil
- 10: Kernprofil
- 11: Randprofil
- 12: Aussparung
- 13: Verdickung
- 14: Festigkeitsträger
- 15: Profilstrang
- 16: Kernextrudatstrang
- 17: Profilrolle

## Patentansprüche

1. Fahrzeugluftreifen mit Notlaufeigenschaften bei Druckluftverlust, bestehend aus einem profilierten Laufstreifen (1), einem mehrlagigen Gürtelverband (2), einer Innenschicht (4), einer zumindest einlagig ausgeführten Karkasse (3), Seitenwänden (8) und mit zumindest je einem im Bereich der Seitenwand (8) eingebrachten, im Querschnitt mondsichelförmigen Verstärkungsprofil (9), welches sich jeweils zumindest über einen Großteil der Seitenwandlänge erstreckt und welches aus einem Kernprofil (10) und einem das Kernprofil (10) fest umschließenden Randprofil (11) besteht, wobei das Kern- (10) und das Randprofil (11) aus extrudierbaren Materialien bestehen, die unterschiedliche Eigenschaften aufweisen,
**dadurch gekennzeichnet,**
**dass** das Kernprofil (10) eine von dem Querschnitt des Randprofils (11) abweichende Querschnittsform aufweist,
und zwar dergestalt, dass zumindest die axial innen liegende Seite des Kemprofilquerschnitts von der Form einer Mondsichel durch zumindest eine zusätzliche Aussparung abweicht.

2. Fahrzeugluftreifen nach Anspruch 1,
**dadurch gekennzeichnet,**
**dass** beide Spitzen des Kernprofils (10) im Querschnitt Verdickungen (13) aufweisen.

3. Fahrzeugluftreifen nach Anspruch 2,
**dadurch gekennzeichnet,**
**dass** die axial innen liegende Seite des Kernprofils (10) im Querschnitt kammartig mit einer Vielzahl von wellenartigen und/oder zick-zackartigen Aussparungen versehen ist.

4. Fahrzeugluftreifen nach Anspruch 2,
**dadurch gekennzeichnet,**
**dass** das Kernprofil (10) die Querschnittsform einer Hantel mit zwei endseitigen Verdickungen (13) aufweist, wobei die Hantelverdickungen bohnenförmig nach axial innen weisen.

5. Fahrzeugluftreifen nach einem der vorangehenden Ansprüche,
**dadurch gekennzeichnet,**
**dass** das Kernprofil (10) innerhalb des Randprofils (11) asymmetrisch angeordnet ist, so dass das Kernprofil (10) in axialer und/oder radialer Richtung verschoben dezentriert angeordnet ist.

6. Fahrzeugluftreifen nach einem der vorangehenden Ansprüche,
**dadurch gekennzeichnet,**
**dass** die Shore-A-Härte des Kernprofils (10) zwischen 74 und 82, insbesondere zwischen 78 und 81, beträgt und
**dass** die Schore-A-Härte des Randprofils (11) zwischen 60 und 76, insbesondere zwischen 63 und 66, beträgt.

7. Fahrzeugluftreifen nach einem der vorangehenden Ansprüche,
**dadurch gekennzeichnet,**
**dass** das Material des Kernprofils (10) Festigkeitsträger (14) in Form von Fasern aufweist.

8. Fahrzeugluftreifen nach Anspruch 7,
**dadurch gekennzeichnet,**
**dass** die Festigkeitsträger (14) in ihrer Längsausrichtung senkrecht zur Querschnittsfläche des Kernprofils (10) angeordnet sind.

9. Fahrzeugluftreifen nach Anspruch 7 oder 8,
**dadurch gekennzeichnet,**
**dass** die Fasern aus Textil, Polyamid, Aramid, Kohlefasern, Metall oder Metalllegierungen mit Formgedächtnis, vorzugsweise NiTi-Legierungen bestehen.

10. Verfahren zur Herstellung eines Verstärkungsprofils (9) gemäß einem der Ansprüche 1-8, wobei das Verstärkungsprofil (9) aus zwei verschiedenen Materialien durch Koextrusion hergestellt wird,
**dadurch gekennzeichnet,**
**dass** man das Material für das Randprofil (11) durch ein Mundstück presst, welches einen Ringschlitz aufweist und schlauchförmiges Profil erzeugt, welches ein innenliegendes Kernprofilextrudat aus dem zweiten Material formschlüssig umschließt, dass man anschließend das noch plastische Extrudat durch ein oder mehrere profilierte Rollenpaare (17) führt, mit denen man das schlauchförmige Profil mit dem in dem schlauchförmigen Profil eingeschlossenen Kernprofil (10) fest verbindet und mit denen man dem Verstärkungsprofil (9) Form gibt.

11. Verfahren nach Anspruch 10,
**dadurch gekennzeichnet,**
**dass** man das Profil (9) nach Formgebung vorvernetzt.

## Claims

1. Pneumatic vehicle tyre having run-flat properties in the event of pressure loss, comprising a profiled running strip (1), a multiple-layer belt composite (2), an inner layer (4), a carcass (3) of at least single-layer configuration, side walls (8) and having at least in each case one reinforcement profile (9) which is introduced into the region of the side wall (8), has a crescent-shaped cross section, extends in each case at least over a large part of the sidewall length and comprises a core profile (10) and an edge profile (11) which encloses the core profile (10) firmly, the core profile (10) and the edge profile (11) comprising materials which can be extruded and have different properties, **characterized in that** the core profile (10) has a cross-sectional shape which differs from the cross section of the edge profile (11), to be precise in such a way that at least that side of the core profile cross section which lies axially on the inside differs from the shape of a crescent by way of at least one additional cut-out.

2. Pneumatic vehicle tyre according to Claim 1, **characterized in that** both tips of the core profile (10) have thickened portions (13) in cross section.

3. Pneumatic vehicle tyre according to Claim 2, **characterized in that** that side of the core profile (10) which lies axially on the inside is provided in cross section in a comb-like manner with a multiplicity of undulating and/or zigzag-like cut-outs.

4. Pneumatic vehicle tyre according to Claim 2, **characterized in that** the core profile (10) has the cross-sectional shape of a dumbbell with two end-side thickened portions (13), the dumbbell thickened portions pointing axially to the inside in a bean-shaped manner.

5. Pneumatic vehicle tyre according to one of the preceding claims, **characterized in that** the core profile (10) is arranged asymmetrically within the edge profile (11), with the result that the core profile (10) is arranged decentralized in a manner which is displaced in the axial and/or radial direction.

6. Pneumatic vehicle tyre according to one of the preceding claims, **characterized in that** the Shore A hardness of the core profile (10) is between 74 and 82, in particular between 78 and 81, and **in that** the Shore A hardness of the edge profile (11) is between 60 and 76, in particular between 63 and 66.

7. Pneumatic vehicle tyre according to one of the preceding claims, **characterized in that** the material of the core profile (10) has strength supports (14) in the form of fibres.

8. Pneumatic vehicle tyre according to Claim 7, **characterized in that** the strength supports (14) are arranged, in their longitudinal orientation, perpendicularly with respect to the cross-sectional area of the core profile (10).

9. Pneumatic vehicle tyre according to Claim 7 or 8, **characterized in that** the fibres comprise textile, polyamide, aramid, carbon fibres, metal or metal alloys with shape memory, preferably NiTi alloys.

10. Method for producing a reinforcement profile (9) according to one of Claims 1 to 8, the reinforcement profile (9) being produced from two different materials by coextrusion, **characterized in that** the material for the edge profile (11) is pressed through a die relief which has an annular slot and produces tubular profile which encloses positively a core-profile extrudate which lies on the inside and is made from the second material, **in that** subsequently the extrudate which is still plastic is guided through one or more profiled roller pairs (17), by way of which the tubular profile is connected firmly to the core profile (10) which is enclosed in the tubular profile, and by way of which the reinforcement profile (5) is shaped.

11. Method according to Claim 10, **characterized in that** the profile (9) is precrosslinked after shaping.

## Revendications

1. Bandage pneumatique pour véhicule présentant une capacité de roulage de secours en cas de perte de pression d'air, constitué d'une bande de roulement profilée (1), d'un ensemble de ceinture (2) en plusieurs couches, d'une couche intérieure (4), d'une carcasse (3) réalisée en au moins une couche, de parois latérales (8) et d'au moins un profilé de renfort (9) à section transversale en croissant de lune disposé dans la zone occupée par la paroi latérale (8), s'étendant sur au moins une grande partie de la longueur de la paroi latérale et constitué d'un profilé d'âme (10) et d'un profilé de bord (11) qui entoure solidairement le profilé d'âme (10), le profilé d'âme (10) et le profilé de bord (11) étant constitués de matériaux extrudables à propriétés différentes,
**caractérisé en ce que**
la section transversale du profilé d'âme (10) a une forme qui diffère de celle de la section transversale du profilé de bord (11), par le fait qu'au moins le côté de la section transversale du profilé d'âme situé axialement à l'intérieur diffère de la forme d'un croissant de lune par au moins une découpe supplémentaire.

2. Bandage pneumatique pour véhicule selon la revendication 1, **caractérisé en ce que** les deux pointes de la section transversale du profilé d'âme (10) présentent des épaississements (13).

3. Bandage pneumatique pour véhicule selon la revendication 2, **caractérisé en ce que** le côté du profilé d'âme (10) situé axialement à l'intérieur est doté en coupe transversale d'une sorte de peigne constitué de nombreuses découpes ondulées et/ou en zigzag.

4. Bandage pneumatique pour véhicule selon la revendication 2, **caractérisé en ce que** la section transversale du profilé d'âme (10) a la forme d'un haltère qui présente deux épaississements terminaux (13), les épaississements de l'haltère ayant la forme de haricots orientés axialement vers l'intérieur.

5. Bandage pneumatique pour véhicule selon l'une des revendications précédentes, **caractérisé en ce que** le profilé d'âme (10) est disposé asymétriquement à l'intérieur du profilé de bord (11) de telle sorte que le profilé d'âme (10) est décentré dans la direction axiale et/ou dans la direction radiale.

6. Bandage pneumatique pour véhicule selon l'une des revendications précédentes, **caractérisé en ce que** la dureté Shore A du profilé d'âme (10) est comprise entre 74 et 82 et en particulier entre 78 et 81 et **en ce que** la dureté Shore A du profilé de bord (11) est comprise entre 60 et 76 et en particulier 63 et 66.

7. Bandage pneumatique pour véhicule selon l'une des revendications précédentes, **caractérisé en ce que** le matériau du profilé d'âme (10) présente des renforts (14) qui ont la forme de fibres.

8. Bandage pneumatique pour véhicule selon la revendication 7, **caractérisé en ce que** l'extension longitudinale des renforts (14) est disposée à la perpendiculaire de la surface de la section transversale du profilé d'âme (10).

9. Bandage pneumatique pour véhicule selon les revendications 7 ou 8, **caractérisé en ce que** les fibres sont constituées de textile, de polyamide, d'aramide, de fibres de carbone, de métal ou d'alliages métalliques à mémoire de forme et de préférence d'alliages de NiTi.

10. Procédé de fabrication d'un profilé de renfort (9) selon l'une des revendications 1 à 8, dans lequel le profilé de renfort (9) est fabriqué par coextrusion de deux matériaux différents,
**caractérisé en ce que**
on refoule le matériau du profilé de bord (11) par une pièce d'embouchure qui présente une fente annulaire et forme un profilé en tuyau flexible qui entoure en correspondance géométrique un profilé intérieur d'âme extrudé en le deuxième matériau, **en ce que** l'on fait ensuite passer l'extrudé encore plastique entre des rouleaux profilés d'une ou plusieurs paires (17) de rouleaux profilés qui relient solidairement le profilé en forme de tuyau flexible au profilé d'âme (10) englobé dans le profilé en forme de tuyau flexible et qui donnent sa forme au profilé de renfort (5).

11. Procédé selon la revendication 10, **caractérisé en ce que** l'on préréticule le profilé (9) après l'avoir façonné.
